# EUROPÄISCHE PATENTSCHRIFT

(11) **EP 2 045 125 B1**
(45) Veröffentlichungstag und Bekanntmachung des Hinweises auf die Patenterteilung: **27.02.2013**
(21) Anmeldenummer: 08017474.1
(22) Anmeldetag: 06.10.2008
(51) Int. Cl.: B60P 7/08

(54) **Vorrichtung zur Sicherung von Ladegut**
Device for securing a load
Dispositif destiné à la sécurisation de biens de chargement

(30) Priorität: 04.10.2007 DE 202007013898 U
(43) Veröffentlichungstag der Anmeldung: 08.04.2009
(73) Patentinhaber: allsafe Jungfalk GmbH & Co. KG, 78234 Engen (DE)
(72) Erfinder: DaRin, Lorenz, 8260 Stein am Rhein (CH)
(74) Vertreter: Weiss, Peter

(56) Entgegenhaltungen:
- WO-A-2005/016689
- DE-U1- 20 109 024
- DE-U1-202006 014 771
- DE-U1-202007 005 993
- US-A1- 2001 040 382

## Beschreibung

Die Erfindung betrifft eine Vorrichtung zur Sicherung von Ladegut in einem Laderaum gemäss dem Oberbegriff von Anspruch 1.

### Stand der Technik

Ladegut beliebiger Art wird heute in stationären und/oder bewegbaren Laderäumen, wie insbesondere Transporträumen von Flugzeugen, Schiffen oder Fahrzeugen und insbesondere in Frachträumen von Kleintransportern durch eine flächige Überdeckung, wie bspw. eine Plane, aber insbesondere durch Ladungssicherungsnetze festgelegt. Dies geschieht meist über Zurrgurte, die mit einer entsprechenden Klemmeinrichtung zusammenwirken, damit die flächige Überdeckung über das Ladegut gespannt bleibt.

Allerdings wirken sich derartige Überdeckung mit ihren Zurrgurten bei der Beladung des Laderaums störend aus, so dass heute daran gedacht ist, diese Ladungssicherungselemente beim Beladen des Laderaumes aus dem Zugriffsbereich des Ladegutes zu bringen. Hierzu wird bspw. in der DE 201 13 047 U1 ein System zur Sicherung einer Ladung in einem Beförderungsmittel vorgeschlagen, welches zumindest einen Spanngurt aufweist, der mittels einer Spann- und Arretierungsvorrichtung über eine Ladung spannbar ist. Dabei soll der Spanngurt mit wenigstens einem seiner Endbereiche im Bodenbereich des Beförderungsmittels befestigbar sein. Ferner weist das System wenigstens ein Zugelement auf, welches im Deckenbereich des Beförderungsmittels angeordnet ist, wobei das Zugelement in seiner Länge veränderlich ist, einer Rückzugskraft zur Decke hin unterliegt und mit wenigstens einem Ende am Spanngurt angreift.

Auch in der DE 10 2006 001 405 B4 ist eine derartige Rückholautomatik vorgesehen, wobei jedoch je zwei Expandergummibänder mit einer ausreichenden Dehnbarkeit auf beiden Seiten des Ladungssicherungsnetzes vorgesehen sind. Dies bedeutet einen hohen Aufwand. Ferner ist die Bedienbarkeit schwierig, vor allem, wenn der Laderaum bereits beladen ist.

Die WO 2005/016689 A1 offenbart eine Laufradstruktur, die zur Verwendung in einem Frachtsicherungssystem in einem Transportmittel angeordnet sein kann, wobei Laufradstrukturen beweglich mit Laufschienen verbindbar sind und wobei eine Frachtabdeckung vorgesehen ist, welche daran angebrachte elastische Elemente umfasst, die mit den Laufradstrukturen verbindbar sind. Die Frachtabdeckung umfasst Befestigungsmittel, um die Frachtabdeckung an das Transportmittel zu befestigen, um die Fracht zu sichern und abzudecken.

Die DE 20 2006 014 771 U1 beschreibt ein Ladungssicherungsnetz für Kleintransporter für den Paketdienst und andere Dienste mit unterschiedlichem Ladungsaufkommen, an dem Zurrgurte mit Karabinern oder Endverschlüsse und Seilwinden zur Netzbefestigung vorhanden sind. Eine Festziehautomatik ist vorgesehen, indem mehrere Winden m Fahrzeugboden oder mit Umlenkrollen im oberen Fahrzeugbereich befestigt sind und das am Fahrzeugdach hängende Sicherungsnetz herunter und über die Ladung ziehen.

### Aufgabe

Aufgabe der vorliegenden Erfindung ist es, eine Vorrichtung der o.g. Art zu schaffen, welche einfach aufgebaut ist und eine bestmögliche Benutzerfreundlichkeit aufweist.

### Lösung der Aufgabe

Zur Lösung der Aufgabe führen die Merkmale des kennzeichnenden Teils von Anspruch 1.

Sofern sich auf beiden Seiten der Überdeckung eine Rückholautomatik befindet, werden nur insgesamt zwei Expanderseile benutzt, die mit ihren Umlenkeinrichtungen zusammenwirken.

Auch die Umlenkeinrichtungen sind einfach aufgebaut. Je zwei Umlenkrollen werden von zwei Klemmstreifen so gehalten, dass sie zwischen den beiden Klemmstreifen drehen können. Beide Klemmstreifen sind an einem Ende durch eine Verbindungsöse miteinander verbunden, die gleichzeitig auch der Festlegung der Umlenkeinrichtung bspw. über einen Karabinerhaken an einem Spriegelhaken in dem Laderaum dient.

Weiterhin ist vorgesehen, dass zumindest zwei Zurrgurte an einer Öse festgelegt sind. Dies bedeutet, dass an dieser Zurröse beide Zurrgurte festgezogen werden können, so dass es nicht mehr notwendig ist, dass eine Bedienperson hinter der Ladung in die hinterste Ecke des Laderaumes kriechen muss, um dort den Zurrgurt zu betätigen. Das bedeutet wiederum aber auch, dass einige der Zurrgurte verlängert ausgebildet und durch Umlenkösen umgelenkt werden müssen. Vor allem ist dies für Zurrgurte hinter der Ladung oder an anderer schlecht zugänglicher Stelle vorgesehen. Diese verlängerten Zurrgurte werden dann durch die Umlenkösen zu den Zurrösen geführt, die bspw. von einer Öffnung des Laderaumes her gleich erreichbar sind.

Es versteht sich von selbst, dass jedem Zurrgurt auch eine entsprechende Klemmeinrichtung zugeordnet ist, mit der der Zurrgurt verkürzt und in dieser verkürzten Position festgelegt werden kann.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht einer erfindungsgemässen Vorrichtung zur Sicherung von Ladegut in einem Laderaum;
Figur 2 eine Draufsicht auf eine Klemmeinrichtung zum Straffen von Zurrgurten;
Figur 3 eine schematisch dargestellte Draufsicht auf Teile der Vorrichtung gemäss Figur 1 mit einem Beispiel der Führung der Zurrgurte.

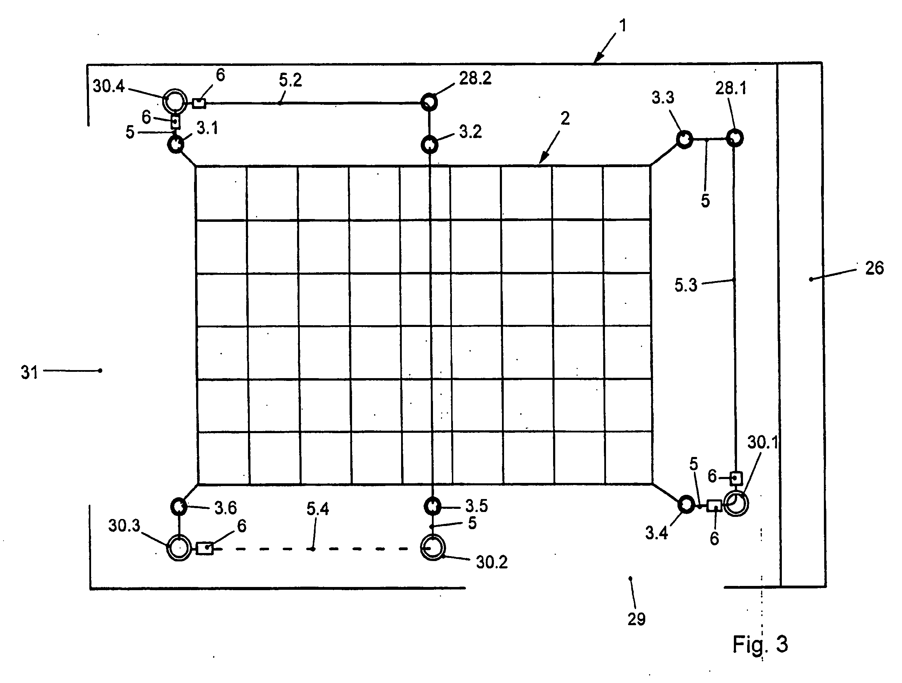

Eine erfindungsgemässe Vorrichtung zur Sicherung von Ladegut in einem in Figur 3 nur schematisch angedeuteten Laderaum 1 bspw. eines Kleintransporters weist eine Überdeckung 2 auf. Diese Überdeckung besteht im vorliegenden Ausführungsbeispiel aus einem Ladungssicherungsnetz.

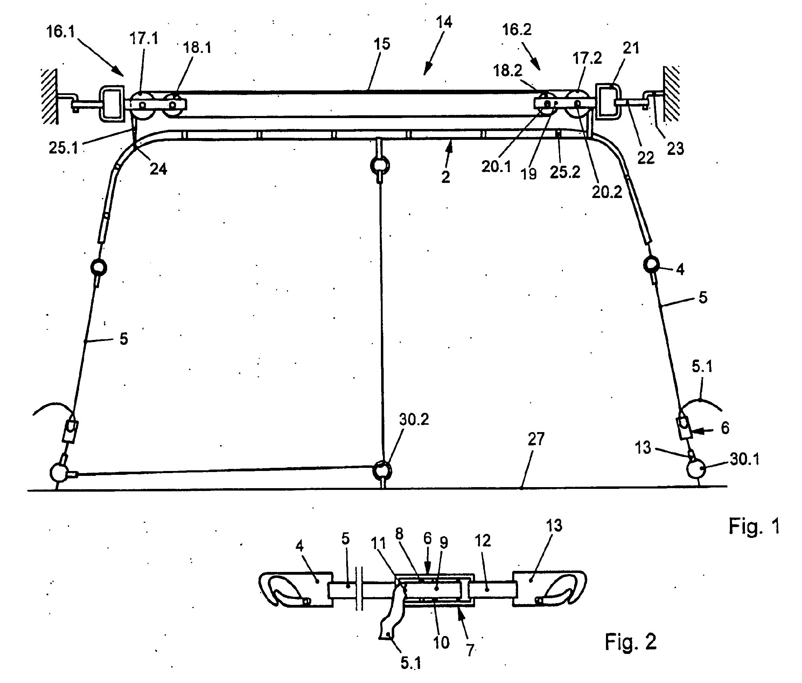

Der Überdeckung 2 sind in den Eckbereichen und auch an den Randkanten insgesamt sechs Ösen 3.1 bis 3.6 zugeordnet. In die Öse 3.1 bis 3.6 kann ein Karabinerhaken 4 eingehängt werden, an dem ein Zurrgurt 5 angeordnet ist. Ein Ende des Zurrgurtes 5 ist durch eine Klemmeinrichtung 6 (siehe Figur 2) geführt. Diese Klemmeinrichtung 6 besteht aus einem Schnallenrahmen 7, der eine Umlenkachse 8 für das Ende des Zurrgurtes 5 aufweist. In dem Schnallenrahmen 7 befindet sich ein federbelasteter Klemmhebel 9, der um eine eigene Achse 10 dreht. Die nicht näher gezeigte Feder bewirkt, dass eine gezahnte Stirnkante 11 dieses Klemmhebels 9 gegen das umgelenkte Ende 5.1 des Zurrgurtes 5 drückt.

Anderenends des Zurrgurtes 5 ist der Schnallenrahmen 7 über ein Gurtstück 12 mit einem weiteren Karabinerhaken 13 verbunden.

In Figur 1 und 3 ist ferner erkennbar, dass bestimmte Zurrgurte, die mit 5.2, 5.3 und 5.4 gekennzeichnet sind, gegenüber den Zurrgurten 5 verlängert ausgebildet sind.

Des weiteren ist der Überdeckung 1 eine Rückholautomatik 14 zugeordnet. Diese Rückholautomatik weist ein Expanderseil 15 auf, welches in seiner Länge dehnbar ausgebildet. Dieses Expanderseil 15 befindet sich zwischen zwei Umlenkeinrichtungen 16.1 und 16.2, die beabstandet voneinander angeordnet sind. In jeder Umlenkeinrichtung 16.1 und 16.2 befindet sich eine äussere Umlenkrolle 17.1 und 17.2 sowie eine innere Umlenkrolle 18.1 und 18.2. Die Umlenkrollen werden von zwei Klemmstreifen 19 gehalten, wobei sie zwischen diesen beiden Klemmstreifen 19 um jeweilige Drehachsen 20.1 und 20.2 drehbar gehalten sind. Die beiden Klemmstreifen 19 sind über eine Verbindungsöse 21 miteinander verbunden und können zur Festlegung bspw. an einer Decke eines Laderaumes eines Kleintransporters über einen entsprechenden Karabinerhaken 22 an Ankerschlaufen oder Spriegelhaken 23 festgelegt werden.

Das Expanderseil 15 verläuft von seiner Anbindung 24 an der Überdeckung 2 um die erste äussere Umlenkrolle 17.1 der Umlenkeinrichtung 16.1 und von dort zu der Umlenkeinrichtung 16.2. Dort umschlingt es teilweise die innere Umlenkrolle 18.2 und wird dann zurück zur ersten Umlenkeinrichtung 16.1 geführt. Dort umschlingt es teilweise die innere Umlenkrolle 18.1 und wird zurück zur zweiten Umlenkeinrichtung 16.1 geführt. Dort verläuft es um die zweite äussere Umlenkrolle 17.2 und ist dann wieder an der Überdeckung 2 angebunden. Die beiden Enden 25.1 und 25.2 des Expanderseils 15 sind dabei bevorzugt verdickt ausgebildet, so dass sie nicht durch die beiden Klemmstreifen 19 hindurchrutschen können.

Die gewählte Führung des Expanderseils 15 im Zusammenspiel mit den Ankerschlaufen bzw. Spriegelhaken hat den Vorteil einer einfachen und schnellen Montage und Demontage. Die symmetrische Umschliessung ergibt einen besseren Längenausgleich des Expanderseils 15 über den Rollen (kein Slip-Stick-Effekt). Ferner ist die Raumausnutzung verbessert. Auch ist das Expanderseil 15 nach der Montage leicht vorgespannt und sichert so den Kraftschlussanteil, da es Zug auf die Karabinerhaken ausübt.

Jeweils eine derart beschriebene Rückholautomatik 14 ist bevorzugt entlang von den beiden in Längsrichtung verlaufenden Randkanten der Überdeckung 2 vorgesehen.

Die Funktionsweise der vorliegenden Erfindung ist folgende:

Die Überdeckung 2 wird mittels der bzw. den Rückholautomatiklen 14 nahe einer Decke eines Laderaumes von bspw. einem Kleintransporter an den entsprechenden Spriegelhaken 23 festgelegt. Es hängt damit über dem Ladegut. Die Zurrgurte hängen nach unten und werden nun wie folgt durch Zurrösen geführt bzw. direkt mit den Zurrösen verbunden. Nahe einer Rückwand bzw. Rückbank 26 des Kleintransporters sind an dessen Boden 27 eine Umlenköse 28.1 und nahe einer Öffnung 29 des Laderaums 1 eine Zurröse 30.1 vorgesehen. Eine Zurröse 30.2 links neben der Öffnung 29 kann auch, wie gestrichelt angedeutet, als Umlenköse ausgebildet sein, wobei dann auch der entsprechende Zurrgurte 5.4 verlängert ausgebildet ist. Er führt dann zu einer Zurröse 30.3 nahe einer hinteren Ladeöffnung 31. Dies ist aber nur optional, da der Zurrgurt 5, der von der Öse 3.5 kommt, auch von der Öffnung 29 aus bedient werden könnte.

Der Zurrgurt 5.2 auf der gegenüberliegenden Seite führt von der Öse 3.2 durch eine Umlenköse 28.2 zu der Zurröse 30.4. An dieser Zurröse 30.4 ist auch der Zurrgurt 5 festgelegt, der von der Öse 3.1 kommt.

Dies bedeutet bei der Festlegung eines Ladegutes mithilfe der Überdeckung 2 folgende Arbeitsschritte:

Zuerst wird das Ladegut in den Laderaum 1 durch die Öffnungen 29 und 31 eingebracht, wobei sich die Überdeckung unter der Wirkung der Rückholautomatik 14 entfernt von dem Boden 27 nahe einer Decke des Laderaums befindet. Die Zurrgurte, die in der Anordnung gemäss Figur 3 festgelegt sind, stören das Beladen nicht, da von beiden Öffnungen 29 und 31 aus keine Quergurte über der Ladefläche liegen.

Zum Festlegen des Ladeguts werden nun die beiden Zurrgurte 5 und 5.3, welche an der Zurröse 30.1 rechts von der Öffnung 29 festliegen, angezogen, wobei nur an den jeweiligen Enden 5.1 gezogen werden muss. Ein Rücklauf des jeweiligen Zurrgurtes wird über den Klemmhebel 9 verhindert. Sofern von der Öse 3.5 im linken Bereich der Öffnung 29 ein Zurrgurt 5 zur Zurröse 30.2 führt, kann auch hier ein Anziehen des Zurrgurtes 5 erfolgen. Andernfalls geschieht dies von hinten her mittels eines Zugriffs durch die Öffnung 31.

Von hinten her durch die Öffnung 31 können nun die übrigen Zurrgurte, welche an den Zurrösen 30.3 und 30.4 festliegen, auf einfache Art und Weise bedient werden.

## Patentansprüche

1. Vorrichtung zur Sicherung von Ladegut in einem Laderaum (1) mittels einer flächigen bzw. netzförmigen Überdeckung (2), die mit einer Rückhohlautomatik (14) versehen ist, welche die Überdeckung (2) über dem Ladegut hält, und die über Zurrgurte (5.1 bis 5.4) mit einem Boden (27) des Laderaumes (1) verbindbar ist, wobei die Rückhohlautomatik (14) auf einer Längsseite der Überdeckung (2) ein Expanderseil (15) aufweist, welches um je zwei beabstandete Umlenkrollen (17.1,18.1,17.2,18.2) geführt und danach mit je einem Ende (25.1,25.2) mit der Überdeckung (2) verbunden ist,
**dadurch gekennzeichnet,**
**dass** das Expanderseil (15) von seiner Anbindung (24) an die Überdeckung (2) über eine erste äussere Umlenkrolle (17.1) und von dieser über eine zweite innere Umlenkrolle (18.2) geführt ist, wobei es danach zurück zu einer mit der ersten äusseren Umlenkrolle (17.1) verbundenen inneren Umlenkrolle (18.1) und zwischen diesen beiden Umlenkrollen (17.1,18.1) hindurch verläuft und danach wieder zurück zu einer zweiten äusseren Umlenkrolle (17.2) geführt ist und danach wieder mit der Überdeckung (2) verbunden ist.

2. Vorrichtung nach Anspruch 1, **dadurch gekennzeichnet, dass** zumindest zwei Zurrgurte (5,5.2; 5,5.3 ; 5,5.4) an einer Zurröse (30.1,30.3, 30.4) festgelegt sind.

3. Vorrichtung nach Anspruch 2, **dadurch gekennzeichnet, dass** an der Überdeckung (2) in deren Eckbereichen Zurrgurte (5,5.3) festgelegt sind, wobei zumindest ein Zurrgurt (5.3) zum Führen durch eine Umlenköse (28.1), bevor er seine Zurröse (30.1) erreicht, verlängert ausgebildet ist.

4. Vorrichtung nach Anspruch 2 oder 3, **dadurch gekennzeichnet, dass** zwischen den Eckbereichen der Überdeckung (2) zumindest ein weiterer Zurrgurt (5.2,5.4) mit einer Randkante der Überdeckung (2) verbunden ist, der zum Führen durch eine Umlenköse (28.2,30.2), bevor er seine Zurröse (30.3, 30.4) erreicht, verlängert ausgebildet ist.

5. Vorrichtung nach wenigstens einem der Ansprüche 2 bis 4, **dadurch gekennzeichnet, dass** den Zurrgurten (5 bis 5.4) vor der jeweiligen Zurröse (30.1 bis 30.4) eine lösbare Klemmeinrichtung (6) zugeordnet ist.

6. Vorrichtung nach wenigstens einem der Ansprüche 1 bis 5, **dadurch gekennzeichnet, dass** je zwei Umlenkrollen (17.1,18.1; 17.2,18.2) zwischen zwei Klemmstreifen (19) drehbar gelagert sind, wobei die beiden Klemmstreifen (19) über eine Verbindungsöse (21) miteinander verbunden sind.

## Claims

1. A device for securing cargo in a loading space (1) by means of a two-dimensional or net-shaped covering (2), which is provided with an automatic retraction mechanism (14) which holds the covering (2) over the cargo, and which can be connected via lashing straps (5.1 to 5.4) to a base (27) of the loading space (1), the automatic retraction mechanism (14) having an expander cable (15) on one long side of the covering (2), which cable is guided around two spaced-apart deflection rollers (17.1, 18.1, 17,2, 18.2) in each case and thereafter is connected by one end (25.1, 25.2) in each case to the covering (2),
**characterised in that**
the expander cable (15) is guided from its attachment (24) to the covering (2) over a first, outer, deflection roller (17.1) and from this over a second, inner, deflection roller (18.2), it thereafter extending back to an inner deflection roller (18.1) connected to the first, outer, deflection roller (17.1) and extending through between these two deflection rollers (17.1, 18.1), and thereafter is guided back again to a second outer deflection roller (17.2) and thereafter is connected to the covering (2) again.

2. A device according to Claim 1, **characterised in that** at least two lashing straps (5, 5.2; 5, 5.3; 5, 5.4) are fixed to a lashing eye (30.1, 30.3, 30.4).

3. A device according to Claim 2, **characterised in that** lashing straps (5, 5.3) are fixed to the covering (2) in the corner regions thereof, with at least one lashing strap (5.3) being formed extended for guiding through a deflecting eye (28.1) before it reaches its lashing eye (30.1).

4. A device according to Claim 2 or 3, **characterised in that** between the corner regions of the covering (2) at least one further lashing strap (5.2, 5.4) is connected to a marginal edge of the covering (2), which strap is formed extended for guiding through a deflecting eye (28.2, 30.2) before it reaches its lashing eye (30.3, 30.4).

5. A device according to at least one of Claims 2 to 4, **characterised in that** a detachable clamping means (6) is associated with the lashing straps (5 to 5.4) before the respective lashing eye (30.1 to 30.4).

6. A device according to at least one of Claims 1 to 5, **characterised in that** two deflection rollers (17.1, 18.1; 17.2, 18.2) in each case are rotatably mounted between two clamping strips (19), the two clamping strips (19) being connected together via a connecting eye (21).

## Revendications

1. Dispositif destiné à la sécurisation de biens de chargement d'un espace de chargement (1) au moyen d'un recouvrement (2) plat ou en forme de filet qui est pourvu d'un dispositif de rappel automatique (14) qui maintient le recouvrement (2) sur les biens de chargement, et qui peut être connecté au fond (27) de l'espace chargement (1) par l'intermédiaire de courroies d'amarrage (5.1 à 5.4), le dispositif de rappel automatique (14) présentant sur un côté longitudinal du recouvrement (2) une corde d'extension (15) qui est guidée autour de chaque fois deux poulies de renvoi distantes l'une de l'autre (17.1, 18.1, 17.2, 18.2) et qui est ensuite connectée par chaque extrémité (25.1, 25.2) au recouvrement (2),
**caractérisé par le fait**
**que** la corde d'extension (15) est guidée depuis sa connexion (24) au recouvrement (2) autour d'une première poulie de renvoi extérieure (17.1) et, de cette dernière, autour d'une deuxième poulie de renvoi intérieure (18.2), où elle s'étend ensuite à nouveau vers une poulie de renvoi intérieure (18.1) reliée à la première poulie de renvoi extérieure (17.1) et entre ces deux poulies de renvoi (17.1, 18.1) et ensuite a nouveau vers une deuxième poulie de renvoi extérieure (17.2) et ensuite à nouveau connectée au recouvrement (2).

2. Dispositif selon la revendication 1, **caractérisé par le fait qu'**au moins deux courroies d'amarrage (5, 5.2; 5,5.3; 5, 5.4) sont fixées à un oeillet d'amarrage (30.1, 30.3, 30.4),

3. Dispositif selon la revendication 1, **caractérisé par le fait qu'**au recouvrement (2) sont fixées, dans ses zones de coin, des courroies d'amarrage (5, 5.3), au moins une courroie d'amarrage (5,3) étant réalisée prolongée pour le guidage à travers un oeillet de renvoi (28.1) avant qu'elle n'atteigne son oeillet d'amarrage (30.1).

4. Dispositif selon la revendication 2 ou 3, **caractérisé par le fait qu'**entre les zones de coin du recouvrement (2) est connectée à un bord marginal du recouvrement (2) au moins une autre courroie d'amarrage (5.2, 5.4) qui est réalisée prolongée pour le guidage à travers un oeillet de renvoi (28.2,30.2), avant qu'elle n'atteigne son oeillet d'amarrage (30,3, 30.4).

5. Dispositif selon au moins l'une des revendications 2 à 4, **caractérisé par le fait qu'**aux courroies d'amarrage (5 à 5.4) est associé, avant l'oeillet d'amarrage respectif (30.1 à 30.4), un moyen de serrage amovible (6).

6. Dispositif selon au moins l'une des revendications 1 à 5, **caractérisé par le fait que** chaque fois deux poulies de renvoi (17.1, 18.1; 17.2, 18.2) sont montées rotatives entre deux bandes de serrage (19), les deux bandes de serrage (19) étant connectées l'une à l'autre par l'intermédiaire d'un oeillet de connexion (21).
